Europäisches Patentamt

European Patent Office

Office européen des brevets

(11) Numéro de publication: **0 026 124**
**A1**

## DEMANDE DE BREVET EUROPEEN

(21) Numéro de dépôt: **80401244.1**

(22) Date de dépôt: **29.08.80**

(51) Int. Cl.³: **G 02 B 7/26**

(30) Priorité: **21.09.79 FR 7923596**

(43) Date de publication de la demande:
**01.04.81 Bulletin 81/13**

(84) Etats Contractants Désignés:
**DE GB IT NL**

(71) Demandeur: **THOMSON-CSF**
**173, Boulevard Haussmann**
**F-75360 Paris Cedex 08(FR)**

(72) Inventeur: **Simon, Jacques**
**"THOMSON-CSF" SCPI 173, bld Haussmann**
**F-75360 Paris Cedex 08(FR)**

(72) Inventeur: **Defaut, Bernard**
**"THOMSON-CSF" SCPI 173, bld Haussmann**
**F-75360 Paris Cedex 08(FR)**

(74) Mandataire: **Giraud, Pierre et al,**
**"THOMSON-CSF" - SCPI 173, bld Haussmann**
**F-75360 Paris Cedex 08(FR)**

(54) **Tête opto-électronique comportant un tronçon de fibre optique de très petit diamètre, et dispositif de connexion comportant une telle tête.**

(57) L'invention concerne une tête opto-électronique servant de raccordement entre un composant photo-émetteur ou photo-détecteur et une fibre de transmission optique de très petit diamètre. Elle a pour but de faciliter le couplage et le réglage des positions respectives de la fibre optique et du composant.

A cet effet, la fibre optique (2) est montée dans un porte-fibre (1) comportant un conduit axial assez large (23) sauf en un point d'étranglement (22). Le conduit (23) s'évase, du côté de la diode (7), suivant une forme tronconique (24) tangente au renflement (20) de la fibre (2), en maintenant ce renflement (20) à distance optimale de la diode (7).

Application aux têtes opto-électroniques dans les liaisons par fibres optiques pour télécommunications sur moyenne distance.

FIG.2

1

# TETE OPTO-ELECTRONIQUE COMPORTANT UN TRONCON DE FIBRE OPTIQUE DE TRES PETIT DIAMETRE, ET DISPOSITIF DE CONNEXION COMPORTANT UNE TELLE TETE

L'invention concerne une tête démission, et éventuellement de réception, comportant un tronçon de fibre optique. Elle s'applique notamment à une tête opto-électronique utilisant une diode électroluminescente de surface photoémissive relativement grande et de diagramme de rayonnement peu directif couplée à une fibre de diamètre inférieur à 400 microns, par exemple une fibre optique de 50 à 200 microns de diamètre de coeur.

L'invention concerne également un dispositif de connexion comportant une telle tête.

On sait qu'en télécommunications optiques, on trouve côté émetteur un équipement électronique de modulation, appelé module, puis une tête d'émission opto-électronique associant une diode photoémissive avec un tronçon de fibre optique. Ce tronçon est généralement très court, incorporé à un porte-fibre qui peut constituer un élément mâle ou femelle d'un connecteur de fibres optiques.

Dans le cas de liaisons à courte distance (quelques dizaines à quelques centaines de mètres) on associe généralement une diode électroluminescente à une fibre optique de diamètre supérieur à 400 microns dans une tête d'émission de technologie classique relativement simple et peu coûteuse.

Dans le cas de liaisons à grande distance (quelques dizaines à quelques centaines de kilomètres et dans ce dernier cas, avec amplification en des points intermédiaires) on associe une diode de type laser à une fibre de diamètre de 50 à 100 microns. La tête d'émission est également classique mais fait appel à une technologie de grande précision, par conséquent de coût élevé.

Dans le cas de liaisons à moyenne distance, de l'ordre de quelques kilomètres, il serait intéressant, d'un point de vue économiuqe, d'utiliser la même technologie que pour les courtes distances et d'associer une diode électroluminescente, de faible prix de revient, à une fibre optique de petit diamètre, soit moins de 400 microns pour obtenir des qualités de transmission qui permettent la liaison sans amplification intermédiaire.

2

Malheureusement l'utilisation de cette technologie devient alors difficile en raison d'un certain nombre de problèmes de réalisation, en particulier :

1°) La diode électroluminescente ayant un diamètre du même ordre de grandeur que la fibre optique, une très grande précision doit être observée, notamment en ce qui concerne le centrage de la diode et du trou de perçage du porte-fibre. Dans la technologie classique, les réglages mécaniques ordinaires (en statique) ne permettent pas d'atteindre cette précision et on doit effectuer des réglages en fonctionnement, tête par tête, (en dynamique) c'est à dire en contrôlant la lumière transmise. Cette procédure augmente fortement le prix de revient de la tête d'émission.

2°) La fibre optique ayant un très petit diamètre, et le porte-fibre ayant une longueur non négligeable pour pouvoir jouer son rôle d'élément de connecteur, le porte-fibre doit être muni d'un trou (de l'ordre de 200 microns de diamètre) qu'il devient pratiquement impossible de percer par les moyens usuels sur une telle longueur (quelques millimètres).

L'invention permet d'éviter au moins en partie les difficultés ci-dessus :

A cet effet, une tête opto-électronique comportant un porte-fibre entourant un tronçon de fibre optique de très petit diamètre et une diode photo-émettrice ou photo-détectrice fixée sur une embase rendue solidaire du porte-fibre, est principalement caractérisée en ce que le porte-fibre comporte un conduit axial de diamètre supérieur à celui de la fibre sauf sur une petite partie de sa longueur et que le tronçon de fibre comporte, à son extrémité située du côté de la diode, un renflement de forme sphérique.

L'invention sera mieux comprise, et d'autres caractéristiques apparaitront, au moyen de la description qui suit et des dessins qui l'accompagnent, parmi lesquels :

- la figure 1 représente en coupe une tête opto-électronique classique ;
- la figure 2 représente une réalisation de l'invention ;
- la figure 3 est un schéma explicatif ;
- la figure 4 représente une variante de l'invention.

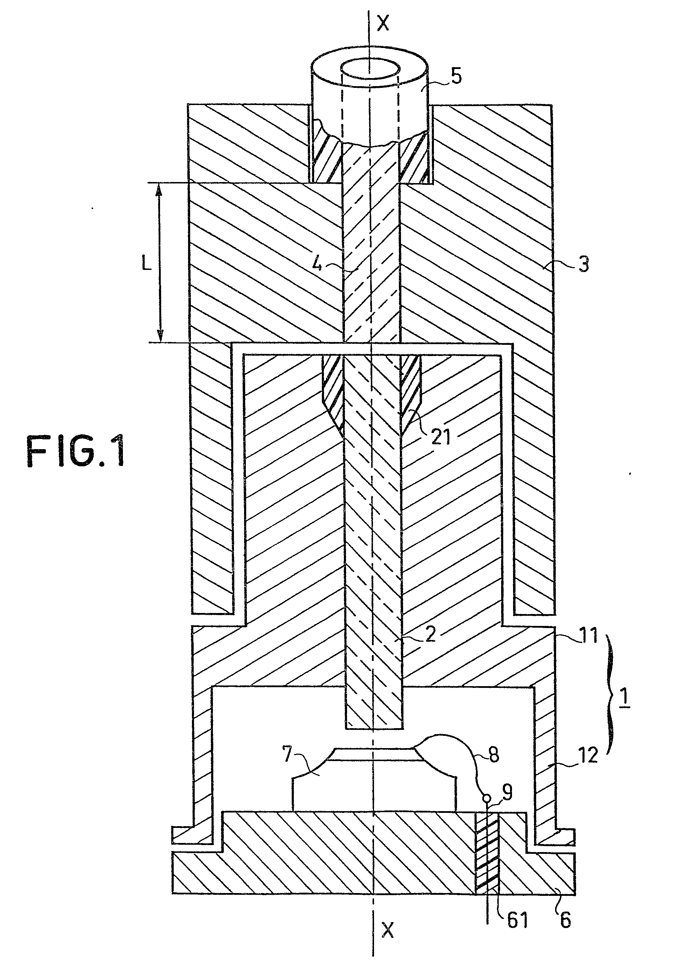

Dans le dispositif représenté figure 1, un porte-fibre 1 contient un tronçon 2 de fibre optique. Le porte-fibre 1 comporte une partie 11 destinée à s'emboîter dans une pièce 3 constituant un embout de connexion placé sur un câble optique comportant une fibre optique 4 et une gaine 5, celle-ci étant éliminée à l'extrémité du câble sur une longueur L. Lorsque les pièces 1 et 3 sont emboîtées, les fibres 2 et 4 sont placées dans le prolongement l'une de l'autre suivant un axe XX.

Le tronçon de fibre 2 est dépourvu de gaine de protection. Une petite quantité de colle ou de résine est déposée autour de la fibre dans un entonnoir 21 situé à la sortie du conduit axial du porte-fibre 1 (côté câble). Le porte-fibre 1 comporte une partie 12 en forme de manchon cylindrique destinée à recevoir une embase métallique 6 portant en son centre une diode électroluminescente 7 dont la surface émissive est placée en regard de la fibre 2. La diode est munie d'une connexion d'alimentation 8 soudée à une tige 9 conductrice traversant l'embase par un passage isolant 61.

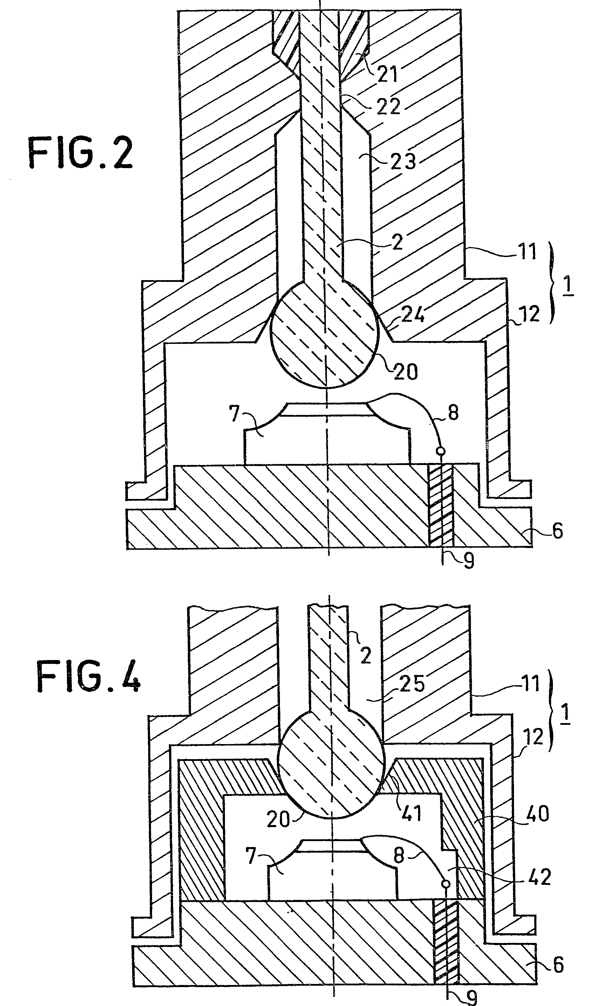

Dans la réalisation de l'invention, figure 2, où les mêmes repères désignent des éléments analogues à ceux de la figure 1, un porte-fibre 1 comporte un entonnoir 21, de diamètre plus petit, surtout à l'endroit du raccordement avec un partie 22 de même diamètre que celui de la fibre. Cette partie 22 est très courte et l'on trouve à sa suite une partie 23 de diamètre relativement grand (au moins 0,3mm) permettant un usinage facile. La partie 23 est elle-même suivie d'une partie évasée 24 destinée à arrêter un renflement 20 de la fibre 2. Le montage de cette fibre s'effectue en enfilant d'abord dans le conduit l'extrémité de la fibre opposée au renflement 20 dans la partie 22 du conduit jusqu'à ce que ce renflement 20 bute contre la partie 24 ; on tend alors la fibre 2 et l'on immobilise la fibre en disposant de la résine ou de la colle dans l'entonnoir 21. Après séchage de celle-ci on sectionne et on arase la fibre à la sortie de l'entonnoir 21.

L'exécution du renflement de forme sphérique 20, à partir d'un tronçon de fibre, peut se faire à la flamme mais aussi, de façon plus reproductible, industriellement en utilisant une "microforge de Fonbrune" (nom commercial).

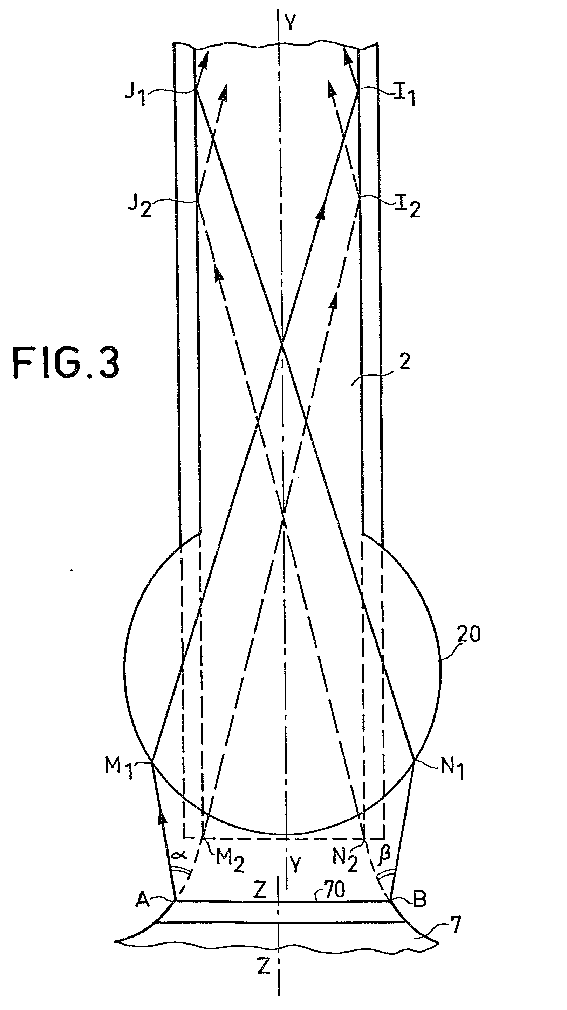

Le schéma de la figure 3 permet d'expliquer au moins en partie les avantages de l'invention. D'une part, en effet, on a dessiné les faisceaux lumineux utiles issus de la face émissive 70 de la diode électroluminescente. Dans le cas de l'invention, un faisceau limité par les rayons lumineux A $M_1$

4

et B N$_1$ réfractés par le renflement 20 suivant des rayons M$_1$ I$_1$ et N$_1$ J$_1$ est effectivement transmis par la fibre optique 2. Dans le cas de la solution classique, les rayons A M$_2$ et B N$_2$ (M$_2$ et N$_2$ désignant les points utiles extrêmes d'une fibre optique sans renflement) sont réfractés en M$_2$ I$_2$ et N$_2$ J$_2$ en limitant un faisceau lumineux nettement plus petit que dans le cas de l'invention. La perte d'énergie lumineuse est d'autant plus importante que les angles $\alpha$ et $\beta$ formés par les rayons extrêmes de bords opposés sont eux-mêmes plus grands. Cela reste vrai même si l'on prenait une fibre optique de diamètre plus grand que la fibre 2, à condition toutefois que le renflement 20 soit suffisamment important en volume. Un réglage de la distance optimale entre le renflement de la fibre optique et la surface émissive de la diode peut être effectué par l'insertion d'une ou plusieurs rondelles entre embase et porte-fibre.

En conséquence, un premier avantage de l'invention provient du fait que la quantité de lumière captée est plus importante. Cet avantage est plus marqué avec une diode électroluminescente dont le diagramme de rayonnement est "lambertien" qu'avec une diode de type laser beaucoup plus directive.

Un deuxième avantage de l'invention est dû au fait que les axes respectifs YY etZZ de la fibre et de la diode peuvent être décalés sans perte notable d'énergie lumineuse, pour une imprécision atteignant jusqu'à 50 microns.

Dans une variante de l'invention, les parties 21 et 22 du conduit axial non représentées dans la coupe partielle de la figure 4, demeurent inchangées. Mais la partie 23 est remplacée par une partie 25 de diamètre plus grand et la partie évasée 24 est supprimée. Une pièce supplémentaire de positionnement est montée sur l'embase 6.Il s'agit du support 40, comportant une partie cylindrique, soudée à l'embase, entourant la diode 7 et laissant passer la lumière par une ouverture 41 comportant des flancs inclinés de manière à être tangents au renflement 20 qu'ils maintiennent ainsi à une distance prédéterminée de la diode 7. Dans l'exemple représenté figure 4, une échancrure 42 pratiquée dans le support 40 dégage la tige 9 et facilite le raccordement de la connexion 8.

Dans d'autres variantes de l'invention très proches des réalisations

5

représentées, soit à la figure 2, soit à la figure 4, la diode électroluminescente est :

    - une diode photodétectrice, la tête opto-électronique devenant alors
une tête de réception ;

    - une diode du type "EROS" (nom commercial) alternativement émettrice et détectrice de lumière ; la tête opto-électronique devient alors une
tête d'émission-réception.

## REVENDICATIONS

1. Tête opto-électronique, comportant un porte-fibre entourant un tronçon de fibre optique de très petit diamètre et une diode photo-émettrice ou photo-détectrice fixée sur une embase rendue solidaire du porte-fibre, caractérisée en ce que le porte-fibre comporte un conduit axial de diamètre supérieur à celui de la fibre optique sauf sur une petite partie de sa longueur, et en ce que le tronçon de fibre comporte, à son extrémité située du côté de la diode, un renflement de forme sphérique.

2. Tête opto-électronique suivant la revendication 1, caractérisée en ce que la diode est électroluminescente.

3. Tête opto-électronique suivant la revendication 1, caractérisée en ce que la diode est photodétectrice.

4. Tête opto-électronique suivant la revendication 1, caractérisée en ce que la diode est utilisable tantôt comme photo-émetteur tantôtcomme photo-détecteur.

5. Tête opto-électronique suivant l'une des revendications 1 à 4, caractérisée en ce que le conduit axial comprend, en partant de l'extrémité proche de la diode, une première partie en forme de tronc de cône évasé du côté de la diode, une deuxième partie de diamètre compris entre le diamètre moyen du renflement et celui de la fibre, une troisième partie de longueur très courte et de diamètre égal à celui de la fibre, enfin une quatrième partie en forme de tronc de cône inversé par rapport à la forme de la première partie, la quatrième partie étant munie d'une substance capable de sceller la fibre au porte-fibre.

6. Tête opto-électronique suivant l'une quelconque des revendications 1 à 4, caractérisée en ce que l'embase est solidaire d'un support de forme tronconique comportant une ouverture dont les flancs maintiennent le renflement de la fibre optique à une distance prédéterminée de la diode.

7. Dispositif de connexion comportant une tête opto-électronique suivant l'une quelconque des revendications 1 à 6, caractérisé en ce qu'il comporte un embout de câble à fibre optique dans lequel le porte-fibre de la tête s'emboîte de manière à abouter les fibres optiques respectives de la tête et du câble.

FIG.1

FIG.2

FIG.4

FIG.3

**0026124**

Office européen
des brevets

**RAPPORT DE RECHERCHE EUROPEENNE**

EP 80 40 1244

Numéro de la demande

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 353 867 (PHILIPS)<br>  * Revendications; figures 3,4, 8 *<br><br>-- | 1-4 | G 02 B 7/26 |
| | FR - A - 2 330 022 (S.N.I.A.)<br>  * Page 6, revendications 1,4, 5,8 *<br><br>-- | 1,2 | |
| | US - A - 4 118 100 (J.E. GOELL)<br>  * Colonne 2, lignes 52-68; colonne 3, lignes 1-37 *<br><br>-- | 1-4 | **DOMAINES TECHNIQUES RECHERCHES (Int. Cl. 3)** |
| | FR - A - 2 289 927 (I.T.T.)<br>  * Revendications; figures 2,4, 6 *<br><br>-- | 5 | G 02 B 7/26 |
| | FR - A - 2 356 167 (L.E.P.A.)<br>  * Revendication 1; figure *<br><br>-- | 1,7 | |
| A | GB - A - 1 005 655 (ELECT.LIM.)<br>  * Revendications; figure *<br><br>-- | 1 | **CATEGORIE DES DOCUMENTS CITES** |
| A | US - A - 3 950 075 (T.A. COOK et al.)<br>  * Résumé; figure 1 *<br><br>---- | 1 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 25-11-1980 | PFAHLER |

OEB Form 1503.1  06.78